# NEUE EUROPÄISCHE PATENTSCHRIFT

(11) **EP 1 418 019 B2**
(45) Veröffentlichungstag und Bekanntmachung des Hinweises auf die Entscheidung über den Einspruch: **14.11.2007**
(45) Hinweis auf die Patenterteilung: 17.11.2004
(21) Anmeldenummer: 03016935.3
(22) Anmeldetag: 25.07.2003
(51) Int. Cl.: B23Q 41/02, B23Q 39/04, B23Q 7/04, B23B 3/22

(54) **Werkzeugmaschine mit mindestens zwei Werkzeugrevolvern, die jeweils eine Werkstückgreifvorrichtung aufweisen**
Machine tool with at least two tool turrets comprising each a workholder
Machine-outil avec au moins deux tourettes revolver à outils, comprenant chacune un dispositif porte-pièce

(30) Priorität: 11.11.2002 DE 10252707
(43) Veröffentlichungstag der Anmeldung: 12.05.2004
(73) Patentinhaber: EMAG Holding GmbH, 73084 Salach (DE)
(72) Erfinder: Walz, Jürgen, 72636 Frickenhausen (DE)
(74) Vertreter: Rapp, Bertram

(56) Entgegenhaltungen:
- WO-A-01/89761
- DE-A- 3 626 324
- DE-A- 19 515 044
- DE-A1- 19 900 294
- DE-U- 9 321 397
- GB-A- 2 095 138

## Beschreibung

Die Erfindung betrifft eine Werkzeugmaschine nach dem Oberbegriff des Anspruchs 1.

Die EP 0 978 351 A2 zeigt eine Vorrichtung zum Bearbeiten von Werkstücken mit mindestens zwei nebeneinander angeordneten Drehmaschinen, die jeweils eine senkrecht eingerichtete, rotationsangetriebene Hauptspindel zum Einspannen des Werkstückes und mindestens eine Einrichtung zur Aufnahme mehrerer Bearbeitungswerkzeuge aufweisen. Die Drehachsen aller Drehmaschinen sind hierbei im wesentlichen senkrecht angeordnet und zwischen den Drehmaschinen ist jeweils eine Rotations-Schwenkeinrichtung vorgesehen, mit der das Werkstück nach der Bearbeitung durch horizontales Schwenken von einer der Drehmaschinen zur nächsten übergeben werden kann. Nachteilig bei dieser Anordnung ist zum einen, dass für jeden auszuführenden Arbeitsschritt eine komplette eigene Drehmaschine mit eigener Steuerung, eigenem Antrieb und eigenem sonstigen Zubehör benötigt wird. Des weiteren ist von Nachteil, dass die Rotations-Schwenkeinrichtung für jeden Übergang von einer Drehmaschine zur nächsten eigens vorgesehen werden muss und hierdurch ein erheblicher zusätzlicher baulicher Aufwand entsteht.

Die DE 199 59 961 A1 zeigt eine Werkzeugmaschine, insbesondere eine Drehmaschine, mit mehreren vertikalen Werkstückspindeln, wobei das Werkstück hier von einer Spindel direkt zur anderen übergeben werden kann, wozu an den Spindeln Aufnahmevorrichtungen für das Werkstück vorgesehen sind. Diese Vorrichtung eignet sich nur bei ganz bestimmten Werkstücken und ist insbesondere für eine beliebige Bearbeitung von wellen- oder rohrförmigen Teilen ungeeignet.

In der DE 199 50 706 C2 ist eine Einrichtung zum Aufspannen und/oder zur Halterung von Werkstücken auf einer Werkzeugmaschine beschrieben. Diese zeigt ein Greifelement, welches für Wellen-/oder rohrförmige Werkstücke geeignet ist und welches auf dem Werkzeugtisch einer Werkzeugmaschine vorgesehen sein kann. Das Greifelement benötigt eine eigene Halterung und einen eigenen Antrieb und ist aufgrund des geringen Platzangebots im Arbeitsbereich einer Werkzeugmaschine oft hinderlich. Darüber hinaus ist es teuer in der Herstellung, da eine eigene Halterung und ein eigener Antrieb vorzusehen sind.

Das deutsche Gebrauchsmuster DE 93 21 397 U1 hat eine Drehmaschine zum Gegenstand, bei der ein Werkzeugträger mit einer Greiferhand ausgestattet sein kann, die das in der zugeordneten Spindel bearbeitete Werkstück greifen und von oben her auf einen neben der Drehmaschine angeordnete Werkstückablage legen kann.

Schließlich beschreibt die WO 01/89761 A1 eine Vorrichtung gemäss dem Oberbegriff des Anspruchs 1 zum Greifen und Transportieren von Werkstücken in Drehmaschinen mit mehreren Bearbeitungsstationen und zwei rechts und links von jeder Bearbeitungsstation angeordneten Greifvorrichtungen zum Erfassen, Transportieren und Positionieren von Werkstücken. Diese Vorrichtung weist auch einen Werkzeugrevolver auf. Allerdings zeigt die Vorrichtung lediglich eine Vielzahl einzelne Elemente, insbesondere Greifelemente und Werkzeugrevolver und keine Kombination dieser Elemente, so dass ein hoher baulicher und kostenmäßiger Aufwand entsteht.

Die GB 2 095 138 offenbart eine Bohrmaschine mit zwei Bearbeitungsstationen, wobei jeder Bearbeitungsstation eine in einem Werkzeugrevolver angeordnete Greifvorrichtung unmittelbar und ausschließlich zugeordnet ist. Jede Greifvorrichtung kann also nur eine Bearbeitungsstation bedienen.

Die DE 199 00 294 A1 zeigt eine Werkzeugmaschine zur Drehbearbeitung eines wellenförmigen, an seinen beiden Seiten eingespannten Werkstücks, mit einem Spindelstock und einem diesem gegenüberliegenden Reitstock, zwischen denen das Werkstück einspannbar ist. Links und rechts der Bearbeitungsstation ist jeweils ein auf einem Kreuzschlitten verschiebbarer Werkzeugrevolver angeordnet. Die Werkzeugrevolver weisen keine Greifvorrichtungen auf.

Es besteht daher die Aufgabe, eine Werkzeugmaschine so auszubilden, dass der Transport der Werkstücke von einer Bearbeitungsstation zur nächsten erheblich zuverlässiger, einfacher und kostengünstiger durchgeführt werden kann.

Gelöst wird diese Aufgabe mit einer Werkzeugmaschine mit den Merkmalen des Anspruchs 1.

Ein Ausführungsbeispiel der Erfindung wird im Folgenden unter Bezugnahme auf die begleitenden Zeichnungen näher beschrieben, welche zeigen:
**Fig. 1**: Eine Vorderansicht einer Werkzeugmaschine mit mehreren Bearbeitungsstationen;
**Fig. 2**: Eine Detaildarstellung einer ersten Bearbeitungsstation der in Figur 1 dargestellten Werkzeugmaschine mit einer Werkstückzuführung, wobei das Greifelement in einer ersten Position ist;
**Fig. 3**: Eine Darstellung gemäß Figur 2, wobei das Greifelement in einer zweiten Position ist;
**Fig. 4**: Eine Darstellung gemäß Figuren 2 und 3, wobei das Greifelement in einer dritten Position ist;
**Fig. 5:** Eine Darstellung zweier benachbarter Bearbeitungsstationen der in Figur 1 dargestellten Werkzeugmaschine im Detail von oben, wobei das Greifelement in einer vierten Position dargestellt ist;
**Fig. 6:** Eine Darstellung gemäß Figuren 2 bis 4, wobei das Greifelement in einer fünften Position dargestellt ist;
**Fig. 7**: Eine Vorderansicht einer Werkzeugmaschine gemäß Fig. 1, jedoch in einer alternativen Ausführungsform.

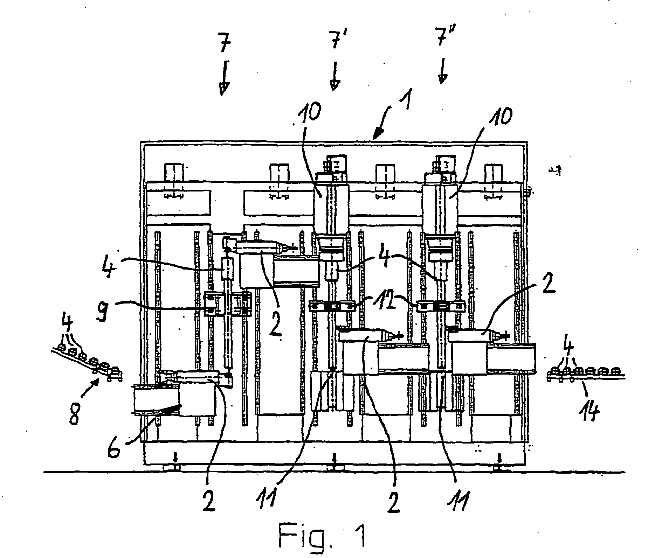

Figur 1 zeigt eine Werkzeugmaschine 1, bei welcher zur besseren Übersichtlichkeit nicht erfindungswesentliche Teile insbesondere Details des Antriebs, der Steuerung und des Gehäuses, nicht dargestellt sind. Die beschriebene Werkzeugmaschine eignet sich insbesondere zur Bearbeitung von Werkstücken 4 in Gestalt von Wellen und die folgende Beschreibung bezieht sich auch auf wellenförmige Werkstücke 4. Die Werkzeugmaschine 1 besteht aus drei aufeinander folgenden Bearbeitungsstationen 7, 7', 7", wobei vorgesehen ist, dass das von der als Magazin ausgebildeten Werkstückzuführung 8 kommende Werkstück 4 diesen Bearbeitungsstationen 7, 7', 7" zugeführt wird und in jeder Bearbeitungsstation eine Bearbeitung des Werkstücks 4 stattfindet. Diese Bearbeitung kann von Station zu Station verschiedenartig oder auch, nach dem sogenannten Pilgerschrittverfahren, ähnlich oder gleichartig sein. Bei dem dargestellten Ausführungsbeispiel wird das Werkstück 4 in den aufeinanderfolgenden Bearbeitungsstationen 7, 7', 7" in verschiedener Weise bearbeitet.

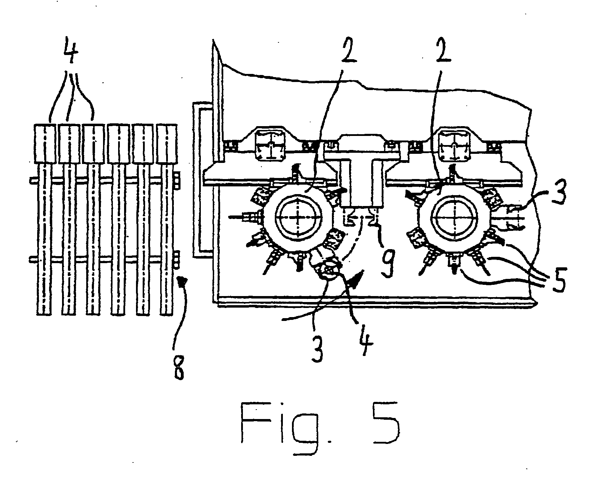

In Figur 1 links von der Werkzeugmaschine befindet sich die als Magazin ausgebildete Werkstückzuführung 8 mit den wellenförmigen Werkstücken 4. Daran schließt sich die erste Bearbeitungsstation 7 an, welche einen Setzstock 9 aufweist, der die zu bearbeitenden Werkstücke 4 in vertikaler Stellung halten kann. Die erste Bearbeitungsstation 7 weist darüberhinaus einen als Kreuzschlitten ausgebildeten Schlitten 6 auf. Dieser ist sowohl in Vertikalrichtung als auch in Horizontalrichtung verfahrbar und trägt an seiner Oberseite einen Werkzeugrevolver 2. Der Werkzeugrevolver 2 ist in an sich bekannter Weise mit einer Vielzahl verschiedener Werkzeuge 5 ausgestattet, was besonders gut in der Ansicht gemäß Figur 5 (Draufsicht auf zwei Werkzeugrevolver 2) zu sehen ist. Ferner weist der Werkzeugrevolver in an sich bekannter Weise einen aktiven Antrieb zur Aktivierung der Werkzeuge 5 auf. Wie ferner aus Figur 5 zu ersehen ist weist der Werkzeugrevolver 2 an einer Position anstelle eines Werkzeugs 5 ein Greifelement 3 auf, welches ebenfalls durch den Antrieb des Werkzeugrevolvers 2 aktivierbar ist und mindestens in eine Öffnungs- und eine Schließposition bringbar ist.

An die erste Bearbeitungsstation 7 schließt sich eine zweite Bearbeitungsstation 7', welche im dargestellten Ausführungsbeispiel eine Motorspindel 10 mit vertikaler Achse aufweist. Diese Motorspindel 10 kann das zu bearbeitende Werkstück 4 oben ergreifen und in Rotation versetzen, wobei die Stabilisierung des Werkstücks 4 unten durch einen Reitstock 11 und gegebenenfalls mittig durch eine Lünette 12 erzielt wird. Ferner weist die zweite Bearbeitungsstation 7' ebenfalls einen Werkzeugrevolver 2 auf, der genauso wie bei der ersten Bearbeitungsstation 7, an einem als Kreuzschlitten ausgebildeten Schlitten 6 gelagert ist. Dieser Werkzeugrevolver 2, sein Schlitten, seine Lagerung und sein Greifelement sind identisch mit dem der ersten Bearbeitungsstation 7.

An die zweite Bearbeitungsstation 7' schließt sich dann eine dritte Bearbeitungsstation 7" an, die genauso ausgebildet ist wie die zweite Bearbeitungsstation 7', also ebenfalls über eine Motorspindel 10 mit vertikaler Achse, einen Reitstock 11 und gegebenenfalls eine Lünette 12 verfügt. Schließlich verfügt die dargestellte Werkzeugmaschine über einen weiteren Werkzeugrevolver 2 nach der dritten Bearbeitungsstation, so dass jede Bearbeitungsstation 7, 7', 7" jeweils einen links und einen rechts angeordneten, an sich gleichartigen, Werkzeugrevolver 2 auf einem Kreuzschlitten aufweist.

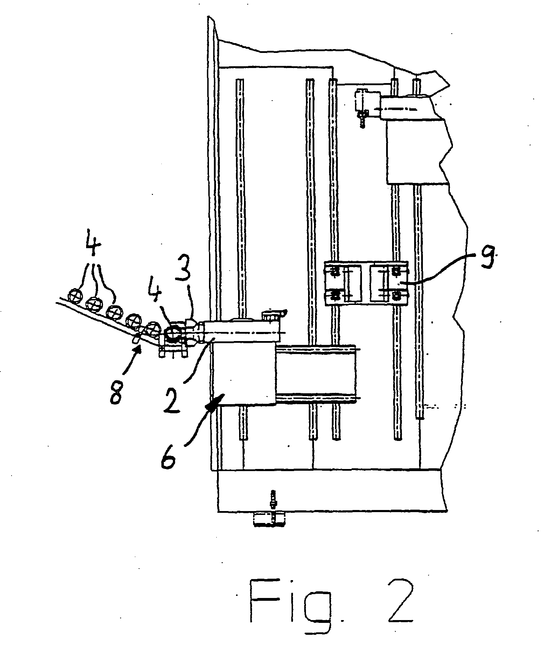

Die Arbeitsweise der Werkzeugmaschine 1 bzw. des Werkzeugrevolvers 2 wird im Folgenden unter Bezugnahme auf die Figuren 2 bis 6 näher erläutert.

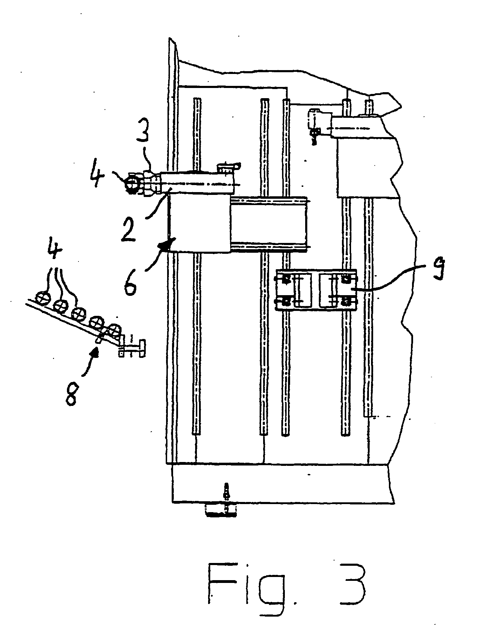

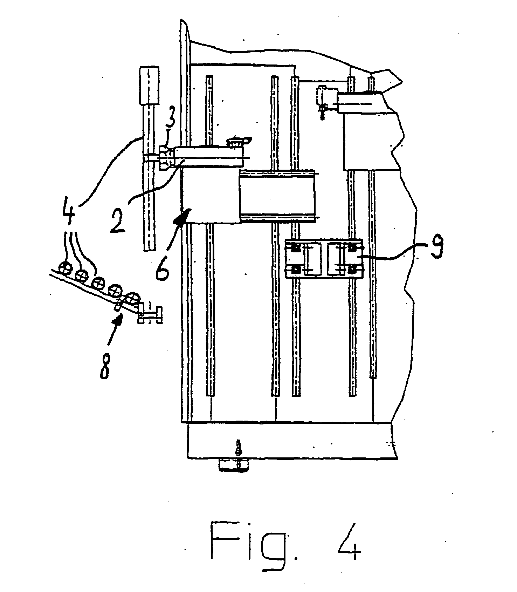

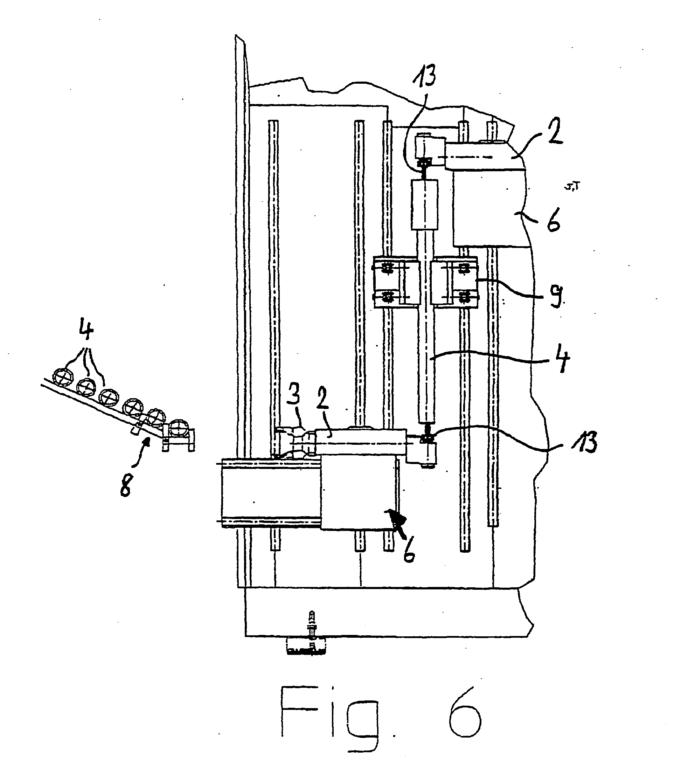

Die von der Werkstückzuführung 8 kommenden, parallel nebeneinander liegenden wellenförmigen Werkstücke 4 sind links von der Werkzeugmaschine 1 in einem Magazin angeordnet. In einem ersten Schritt verfährt der Kreuzschlitten 6 nach unten und links und orientiert den Werkzeugrevolver 2 durch Drehung um die vertikale Achse so, dass das Greifelement dem nächstliegenden Werkstück 4 zugewandt ist. Das Greifelement selbst, welches um eine horizontale Achse drehbar ist, ist so orientiert, dass es das wellenförmige Werkstück 4 ergreifen kann. Nach dem Schließen des Greifelements 3 um das Werkstück 4 verschiebt sich der Schlitten 6 nach oben und nimmt die in Figur 3 dargestellte zweite Position ein. Anschließend dreht sich das Greifelement 3 um 90° um die horizontale Achse, wodurch das Werkstück 4 die in Figur 4 dargestellte dritte Position vertikale Ausrichtung einnimmt. Daran anschließend rotiert der gesamte Werkzeugrevolver 2 um seine Mittelachse, was durch den Pfeil in Figur 5 dargestellt ist, wo das Werkstück 4 in einer vierten Übergangsposition sich befindet. Schließlich erreicht der Werkzeugrevolver die in Figur 6 dargestellte fünfte Position, in welcher das Werkstück 4 von dem Setzstock 9 ergriffen und eingespannt wird und in dieser Position bearbeitet werden kann.

Die Bearbeitung des Werkstücks 4 erfolgt anschließend durch die beiden links und rechts von dieser ersten Bearbeitunsstation 7 angeordneten Werkzeugrevolver 2, wobei in an sich bekannter Weise die verschiedenen Werkzeuge 5 der beiden Werkzeugrevolver 2 zum Einsatz kommen können und Bohrungen, Fräsungen oder andere Maßnahmen an dem Werkstück 4 vorgenommen werden können. Insbesondere in dieser ersten Bearbeitungsstation 7 die Oberseite des Werkstücks 4 derart bearbeitet, dass sie von einer Motorspindel 10 ergriffen werden kann. Im dargestellten Ausführungsbeispiel sind hierfür Stirnfräser 13 für die Bearbeitung der Wände des wellenförmigen Werkstücks 4 vorgesehen.

Nachdem das Werkstück 4 in dieser ersten Bearbeitungsstation 7 bearbeitet wurde, wird es von dem Greifelement 3 des rechts von dieser Bearbeitungsstation 7 angeordneten Werkzeugrevolvers 2 in der gleichen Weise ergriffen, gedreht und dann der zweiten Bearbeitungsstation 7' zugeführt. In dargestelltem Ausführungsbeispiel handelt es sich hierbei um eine Motorspindel 10, in welche das wellenförmige Werkstück 4 oben eingespannt wird, wobei die untere Fixierung durch einen Reitstock 11 und die mittlere Fixierung durch eine Lünette 12 erfolgt. In dieser zweiten Bearbeitungsstation 7' erfolgt die sogenannte Schruppbearbeitung des Werkstücks 4 durch Drehen. Nachdem dieser Bearbeitungsschritt beendet ist, ergreift das von der zweiten Bearbeitungsstation 7' angeordnete Greifelement 3 des entsprechenden Werkzeugrevolvers 2 das Werkstück 4 und transportiert es in die dritte Bearbeitungsstation 7", welche im dargestellten Ausführungsbeispiel ebenfalls eine Motorspindel 10, einen Reitstock 11 und eine Lünette 12 aufweist. Dort erfolgt die Schlichtbearbeitung durch Drehen. Nachdem auch dieser Bearbeitungsschritt beendet ist, transportiert der rechts von der dritten Bearbeitungsstation 7" angeordnete Werkzeugrevolver 2 bzw. dessen Greifelement 3 das Werkstück 4 in die Werkstückablage 14.

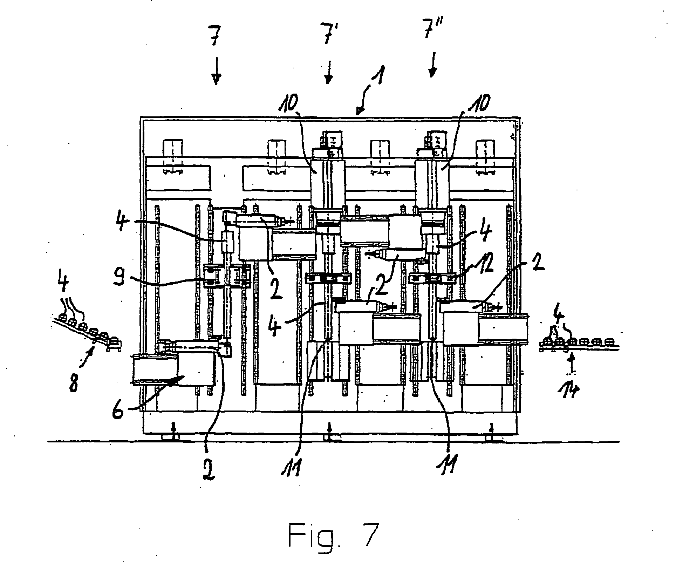

In Fig. 7 ist eine weitere Ausführungsform der Erfindung dargestellt welche unter anderem dadurch ausgezeichnet ist, dass sie einen weiteren Werkzeugrevolver 2 bei unveränderter Anzahl der Bearbeitungsstationen 7 aufweist. Für die Effektivität der Werkzeugmaschine 1 ist es besonders wichtig, die Bearbeitungszeiten an den unterschiedlichen Bearbeitungsstationen 7, 7'und 7" aneinander anzupassen. Durch die besondere Anordnung und horizontale Verfahrbarkeit der Werkzeugrevolver 2 können diese je nach Bedarf wahlweise an der rechts oder links benachbarten Bearbeitungsstation eingesetzt werden. Im Ausführungsbeispiel nach Fig. 7 sind an der letzten Bearbeitungsposition 7" zwei Werkzeuge verschiedener Werkzeugrevolver 2 gleichzeitig im Eingriff, wodurch ein Vier-achs-drehen ermöglicht wird. Da der Vorgang des Schlichtens, welche in dieser zweiten Bearbeitungsstation 7" ausgeführt wird, in der Regel mehr Zeit erfordert als die beiden anderen Bearbeitungsvorgänge (Enden, Bearbeitung und Schruppen) lässt sich die benötigte Zeit für das Schlichten durch gleichzeitigen Einsatz zweier Werkzeuge halbieren. Auf diese Weise erzielt man in den drei genannten Bearbeitungsstationen 7, 7'und 7" in etwa gleich lange Taktzeiten.

Beispielsweise ist es ebenso möglich, dass ein Fräser des Werkzeugrevolvers 2 an der links benachbarten Bearbeitungsposition eine Nut fräßt und anschließend an der rechts benachbarten Bearbeitungsposition eine Schleifscheibe einen Wellensitz schleift. Durch den sehr flexiblen Einsatz der Werkzeuge kann die Produktivität der Werkzeugmaschine deutlich gesteigert werden.

Besonders vorteilhaft bei der erfindungsgemäßen Werkzeugmaschine bzw. dem in dieser verwendeten Werkzeugrevolver 2 ist, dass keine eigene Vorrichtung zum Transport der Werkstücke 4 von einer Bearbeitungsstation zur nächsten vorgesehen werden muss, da in die Werkzeugrevolver 2 jeweils ein Greifelement 3 integriert ist. Hierdurch erspart man sich jegliche, verschleissanfällige Teile und erzielt deutlich günstigere Herstellungskosten sowie außerdem eine kompaktere Bauweise.

Ein weiterer Vorteil der erfindungsgemäßen Werkzeugmaschine besteht darin, dass eine einzige Maschine für mehrere Bearbeitungsschritte, insbesondere für wellenförmige Werkstücke 4, universell einsetzbar ist. Es müssen also nicht, wie aus dem Stand der Technik bekannt, mehrere unabhängige Drehmaschinen hintereinander angeordnet und durch Transportvorrichtungen miteinander verbunden werden, sondern es findet vielmehr eine hochintegrierte Bauweise Verwendung.

Schließlich ist von besonderem Vorteil, dass die zu bearbeitenden Werkstücke hier in senkrechter Stellung bearbeitet werden, was im Gegensatz zu den aus dem Stand der Technik bekannten Vorrichtungen, bei denen die Werkstücke horizontal angeordnet sind, erhebliche Platzvorteile und außerdem eine bessere Zugänglichkeit durch den Werker und eine bessere Übersichtlichkeit der Bearbeitungsschritte bietet.

## Patentansprüche

1. Werkzeugmaschine (1) mit mindestens einer Bearbeitungsstation (7, 7', 7") und mindestens zwei rechts und links davon angeordneten Greifvorrichtungen (3) zum Erfassen, Transportieren und Positionieren von Werkstücken (4), sowie mindestens zwei Werkzeugrevolvern (2) mit jeweils einer Greifvorrichtung (3), **dadurch gekennzeichnet, dass** links und rechts jeder Bearbeitungsstation (7, 7', 7'') jeweils ein Werkzeugrevolver (2) derart verfahrbar angeordnet ist, dass die Bearbeitung und das Greifen des Werkstücks (4) in dieser Bearbeitungsstation (7, 7', 7") durch die Werkzeuge (5) bzw. die Greifvorrichtung (3) beider Werkzeugrevolver (2) erfolgen kann.

2. Werkzeugmaschine (1) nach Anspruch 1, **dadurch gekennzeichnet, dass** sie mindestens zwei Bearbeitungsstationen (7, 7', 7") aufweist und jeder Werkzeugrevolver (2) in dem Wirkbereich von mindestens zwei Bearbeitungsstationen (7, 7', 7 ") verfahrbar ist.

3. Werkzeugmaschine (1) nach einem der voranstehenden Ansprüche, **dadurch gekennzeichnet, dass** sie eine Werkstückzuführstation (8) aufweist und der Werkzeugrevolver (2) in dem Wirkbereich sowohl der Werkstückzuführstation (8) als auch einer Bearbeitungsstation (7) verfahrbar ist.

4. Werkzeugmaschine (1) nach einem der voranstehenden Ansprüche, **dadurch gekennzeichnet, dass** sie eine Werkstückabführstation (14) aufweist und der Werkzeugrevolver (2) in dem Wirkbereich einer Bearbeitungsstation (7") und der Werkstückabführstation (14) verfahrbar ist.

5. Werkzeugmaschine (1) nach einem der voranstehenden Ansprüche, **dadurch gekennzeichnet, dass** mindestens eine Bearbeitungsstation (7) einen Setzstock (9) aufweist, der im Wirkbereich des benachbarten Werkzeugrevolvers (2) liegt.

6. Werkzeugmaschine (1) nach einem der voranstehenden Ansprüche, **dadurch gekennzeichnet, dass** mindestens eine Bearbeitungsstation (7, 7', 7") eine Motorspindel (10) zur Aufnahme einer Seite des Werkstücks (4) und einen Reitstock (11) zur Aufnahme der gegenüberliegenden Seite des Werkstücks (4) sowie optional mindestens eine Lünette (12) zur mittigen Stabilisierung des Werkstücks (4) aufweist.

7. Werkzeugmaschine (1) nach einem der voranstehenden Ansprüche, **dadurch gekennzeichnet, dass** die länglichen Werkstücke (4), z. B. Wellen, während der Bearbeitung vertikal stehen und die ggf. vorhandenen Motorspindeln (10) ebenfalls vertikal angeordnet sind.

8. Werkzeugmaschine (1) nach einem der voranstehenden Ansprüche, **dadurch gekennzeichnet, dass** zwischen jeder Bearbeitungsstation (7, 7', 7") und ihrer benachbarten Station (8; 7, 7', 7"; 14) ein Werkzeugrevolver (2) mit einem Greifelement (3) angeordnet ist, und der Transport der Werkstücke (4) von einer zur nächsten Station (8; 7, 7', 7") durch die Greifelemente (3) der jeweiligen Werkzeugrevolver (2) erfolgt.

9. Werkzeugmaschine (1) nach einem der voranstehenden Ansprüche, **dadurch gekennzeichnet, dass** der Werkzeugrevolver (2) auf einem verfahrbaren Schlitten (6) montiert ist, wobei der Greifer durch Verfahren des Schlittens (6) das Werkstück (4) transportiert.

10. Werkzeugmaschine (1) nach Anspruch 9, **dadurch gekennzeichnet, dass** der verfahrbare Schlitten (6) ein Kreuzschlitten mit zwei zueinander senkrechten Bewegungsrichtungen ist.

11. Werkzeugmaschine (1) nach Anspruch 10, **dadurch gekennzeichnet, dass** der Werkzeugrevolver (2) an dem Kreuzschlitten drehbar gelagert ist.

12. Werkzeugmaschine (1) nach einem der voranstehenden Ansprüche, **dadurch gekennzeichnet, dass** das Greifelement (3) in dem Werkzeugrevolver (2) drehbar gelagert ist.

13. Werkzeugmaschine (1) nach einem der Ansprüche 9 bis 12, **dadurch gekennzeichnet, dass** zur Horizontalbewegung des Kreuzschlittens eine direkt angetriebene Kugelrollspindel verwendet wird.

## Claims

1. Machine tool (1) with at least one machining station (7, 7', 7") and at least two gripping devices (3) arranged to the right and left thereof for grasping, transporting and positioning of workpieces (4), and at least two tool turrets (2) each with a gripping device (3), **characterised in that** in each case a tool turret (2) is arranged to the left and right of the machining station (7, 7', 7") so as to be displaceable such that the machining of the workpiece (4) in this machining station (7, 7', 7") can be carried out by the tools (5) of both tool turrets (2).

2. Machine tool (1) according to claim 1, **characterised in that** it exhibits at least two machining stations (7, 7', 7") and each tool turret (2) is displaceable in the working range of at least two machining stations (7, 7', 7").

3. Machine tool (1) according to one of the preceding claims, **characterised in that** it exhibits a workpiece supplying station (8) and the tool turret (2) is displaceable in the working range of both the workpiece supplying station (8) and a machining station (7).

4. Machine tool (1) according to one of the preceding claims, **characterised in that** it exhibits a workpiece removing station (14) and the tool turret (2) is displaceable in the working range of a machining station (7") and the workpiece removing station (14).

5. Machine tool (1) according to one of the preceding claims, **characterised in that** at least one machining station (7) exhibits a steady rest (9) which lies in the working range of the neighbouring tool turret (2).

6. Machine tool (1) according to one of the preceding claims, **characterised in that** at least one machining station (7, 7', 7") exhibits a motor spindle (10) for reception of one side of the workpiece (4) and a tailstock (11) for reception of the opposite side of the workpiece (4) and optionally at least one steady (12) for central stabilisation of the workpiece (4).

7. Machine tool (1) according to one of the preceding claims, **characterised in that** the elongated workpieces (4), e.g. shafts, stand vertically during machining and the motor spindles (10) which may also be present are also arranged vertically.

8. Machine tool (1) according to one of the preceding claims, **characterised in that** a tool turret (2) with a gripping element (3) is arranged between each machining station (7, 7', 7") and its neighbouring station (8; 7, 7', 7"; 14), and the workpieces (4) are transported from one station to the next (8; 7, 7', 7") by the gripping elements (3) of the respective tool turrets (2).

9. Machine tool (1) according to one of the preceding claims, **characterised in that** the tool turret (2) is mounted on a travelling carriage (6), the gripper transporting the workpiece (4) through the travel of the carriage (6).

10. Machine tool (1) according to claim 9, **characterised in that** the travelling carriage (6) is a cross carriage with two directions of movement at right angles to one another.

11. Machine tool (1) according to claim 10, **characterised in that** the tool turret (2) is mounted rotatably on the cross carriage.

12. Machine tool (1) according to one of the preceding claims, **characterised in that** the gripping element (3) is mounted rotatably in the tool turret (2).

13. Machine tool (1) according to one of claims 9 to 12, **characterised in that** a directly driven ball spindle is used for horizontal movement of the cross carriage.

## Revendications

1. Machine-outil (1) comprenant au moins une station d'usinage (7, 7', 7") et au moins deux dispositifs de préhension (3) agencés à gauche et à droite de cette dernière et destinés à saisir, transporter et positionner des pièces (4), et comprenant au moins deux tourelles revolver (2) comportant chacune un dispositif de préhension (3), **caractérisée en ce qu'**à gauche et à droite de la station d'usinage (7, 7', 7") est respectivement disposée une tourelle revolver (2) déplaçable de telle façon que l'usinage de la pièce (4), dans cette station d'usinage (7, 7', 7") peut être réalisé par les outils (5) des deux tourelles revolver (2).

2. Machine-outil (1) selon la revendication 1, **caractérisée en ce qu'**elle présente au moins deux stations d'usinage (7, 7', 7'') et **en ce que** chaque tourelle revolver (2) peut être déplacée à l'intérieur du rayon d'action d'au moins deux stations d'usinage (7, 7', 7").

3. Machine-outil (1) selon l'une des revendications précédentes, **caractérisée en ce qu'**elle présente une station d'alimentation des pièces (8) et **en ce que** la tourelle revolver (2) peut être déplacée à l'intérieur du rayon d'action à la fois de la station d'alimentation des pièces (8) et d'une station d'usinage (7).

4. Machine-outil (1) selon l'une des revendications précédentes, **caractérisée en ce qu'**elle présente une station d'évacuation des pièces (14) et **en ce que** la tourelle revolver (2) peut être déplacée à l'intérieur du rayon d'action d'une station d'usinage (7") et de la station d'évacuation des pièces (14).

5. Machine-outil (1) selon l'une des revendications précédentes, **caractérisée en ce qu'**au moins une station d'usinage (7) présente une lunette (9) située dans le rayon d'action de la tourelle revolver voisine (2).

6. Machine-outil (1) selon l'une des revendications précédentes, **caractérisée en ce qu'**au moins une station d'usinage (7, 7', 7") présente une broche motorisée (10) destinée à recevoir un côté de la pièce (4) et une poupée mobile (11) destinée à recevoir le côté opposé de la pièce (4) ainsi que, de manière optionnelle, au moins une lunette (12) destinée à stabiliser la pièce (4) en son milieu.

7. Machine-outil (1) selon l'une des revendications précédentes, **caractérisée en ce que** les pièces allongées (4) telles que les arbres sont en position verticale pendant l'usinage, et **en ce que** les broches motorisées (10) éventuellement présentes sont également agencées verticalement.

8. Machine-outil (1) selon l'une des revendications précédentes, **caractérisée en ce qu'**entre chaque station d'usinage (7, 7', 7") et sa station voisine (8 ; 7, 7', 7" ; 14) est logée une tourelle revolver (2) munie d'un élément de préhension (3), et **en ce que** le transport des pièces (4) de l'une à l'autre station (8 ; 7, 7', 7") est effectué par les éléments de préhension (3) des tourelles revolver (2) respectives.

9. Machine-outil (1) selon l'une des revendications précédentes, **caractérisée en ce que** la tourelle revolver (2) est montée sur un chariot porte-outil (6) mobile, l'élément de préhension transportant la pièce (4) grâce au déplacement du chariot porte-outil (6).

10. Machine-outil (1) selon la revendication 9, **caractérisée en ce que** le chariot porte-outil (6) mobile est un chariot porte-outil à mouvements croisés présentant deux sens de déplacement perpendiculaires l'un par rapport à l'autre.

11. Machine-outil (1) selon la revendication 10, **caractérisée en ce que** la tourelle revolver (2) est logée au niveau du chariot porte-outil à mouvements croisés de façon à pouvoir pivoter.

12. Machine-outil (1) selon l'une des revendications précédentes, **caractérisée en ce que** l'élément de préhension (3) est logé dans la tourelle revolver (2) de façon à pouvoir pivoter.

13. Machine-outil (1) selon l'une des revendications 9 à 12, **caractérisée en ce qu'**une broche filetée entraînée directement est utilisée pour obtenir le mouvement horizontal du chariot porte-outil à mouvements croisés.
